# EUROPÄISCHE PATENTSCHRIFT

(11) **EP 4 018 129 B1**
(45) Veröffentlichungstag und Bekanntmachung des Hinweises auf die Patenterteilung: **12.02.2025**
(21) Anmeldenummer: 20753907.3
(22) Anmeldetag: 05.08.2020
(51) Int. Cl.: F24C 7/08

(54) **BETREIBEN EINES HAUSHALTS-GARGERÄTS MIT MINDESTENS EINER KAMERA**
OPERATION OF A HOUSEHOLD COOKING APPLIANCE WITH AT LEAST ONE CAMERA
FONCTIONNEMENT D'UN APPAREIL DE CUISSON MÉNAGER DOTÉ D'AU MOINS UNE CAMÉRA

(30) Priorität: 19.08.2019 DE 102019212364
(43) Veröffentlichungstag der Anmeldung: 29.06.2022
(73) Patentinhaber: BSH Hausgeräte GmbH, 81739 München (DE)
(72) Erfinder: PFEIFFER, Josef, 83236 Übersee (DE); EITER, Hans-Martin, 84558 Kirchweidach (DE)
(86) Internationale Anmeldenummer: PCT/EP2020/071961
(87) Internationale Veröffentlichungsnummer: WO 2021/032477

(56) Entgegenhaltungen:
- DE-A1- 102016 215 550

## Beschreibung

Die Erfindung betrifft ein Verfahren zum Betreiben eines Haushalts-Gargeräts mit einem Garraum und mindestens einer Kamera, die zum Aufnehmen von bildpunktbasierten Bildern aus dem Garraum eingerichtet ist, bei dem mittels der mindestens einen Kamera mindestens ein Bild aus dem Garraum aufgenommen wird und das Bild ausgewertet wird. Die Erfindung betrifft auch ein Haushalts-Gargerät, aufweisend einen Garraum und mindestens eine Kamera zum Aufnehmen von bildpunktbasierten Bildern, wobei das Haushalts-Gargerät zur Durchführung des Verfahrens ausgestaltet ist. Die Erfindung ist insbesondere vorteilhaft anwendbar auf Backöfen, Mikrowellengeräte, Dampfbehandlungsgeräte oder beliebige Kombinationen davon.

DE 10 2016 215 550 A1 offenbart ein Verfahren zum Feststellen eines Bräunungsgrads von Gargut in einem Garraum eines Haushalts-Gargeräts, welches Haushalts-Gargerät eine in den Garraum gerichtete Kamera und eine Lichtquelle zum Beleuchten des Garraums aufweist, und wobei mittels der Kamera ein Referenzbild aufgenommen wird, ein erstes Messbild bei einer ersten Helligkeit der Lichtquelle aufgenommen wird, ein zweites Messbild bei einer zweiten Helligkeit der Lichtquelle aufgenommen wird, aus dem ersten Messbild und dem zweiten Messbild ein Differenzbild erzeugt wird und das Differenzbild mit dem Referenzbild verglichen wird. Ein Haushalts-Gargerät weist eine in einen Garraum gerichtete Kamera, eine Lichtquelle zum Beleuchten des Garraums und eine mit der Kamera und der Lichtquelle gekoppelte Steuereinrichtung auf, wobei das Haushalts-Gargerät zum Durchführen des Verfahrens eingerichtet ist.

DE 10 2005 014 713 A1 offenbart s von einer Sensorvorrichtung mit einer Datenverarbeitungseinheit zum Bestimmen eines Bräunungsgrads eines in einem Garraum angeordneten Garguts und mit wenigstens einem Sensor zum Erfassen einer vom Gargut reflektierten Strahlungsintensität. Um eine Sensorvorrichtung für Gargeräte bereitzustellen, mittels der ein Bräunungsgrad eines Garguts sicher, zuverlässig und insbesondere unabhängig von einer Größe und Form des Garguts bestimmt werden kann, wird vorgeschlagen, dass die Datenverarbeitungseinheit zum Bestimmen eines Relevanzparameters für eine Kenngröße der erfassten Strahlungsintensität abhängig von dem zeitlichen Verlauf der erfassten Strahlungsintensität vorgesehen ist.

WO 2014/053002 A2 stellt eine Vorrichtung zur Charakterisierung einer chromatischen Eigenschaft von Lebensmitteln bereit. Die Vorrichtung umfasst eine Lichtquelle, die angeordnet ist, um Licht mit mindestens zwei Wellenlängen oder Wellenlängenbereichen zu emittieren. Die Lichtquelle ist ferner angeordnet, um das Licht auf eine Oberfläche mindestens des Lebensmittels zu lenken. Die Vorrichtung umfasst auch einen Detektor, der positioniert ist, um mindestens einen Teil des reflektierten Lichts zu erfassen, und angeordnet ist, um eine Ausgabe zu erzeugen, die eine Intensität des erfassten reflektierten Lichts angibt. Die Vorrichtung ist derart angeordnet, dass entsprechende Angaben für die mindestens zwei Wellenlängen oder Wellenlängenbereiche erzeugt werden. Eine Beziehung zwischen der Angabe für eine der mindestens zwei Wellenlängen oder Wellenlängenbereiche und der Angabe für die andere oder eine andere der mindestens zwei Wellenlängen oder Wellenlängenbereiche zeigt die chromatische Eigenschaft der Oberfläche des Lebensmittels an.

DE 10 2017 206 056 A1 offenbart ein Verfahren zum Betreiben eines Gargeräts, bei dem ein Garraum mit Licht verschiedener Wellenlängenbereiche bestrahlt wird und aus dem Garraum stammendes Licht gemessen wird, wobei Messergebnisse spektroskopisch ausgewertet werden und ein Betrieb des Gargeräts abhängig von einem Ergebnis der spektroskopischen Auswertung geändert wird. Ein Gargerät ist zum Ablauf des Verfahrens eingerichtet und weist auf: einen Garraum, mindestens eine Lichtquelle zum Abstrahlen von Licht in den Garraum und mindestens einen Lichtsensor zum Messen von in dem Garraum reflektierten Lichts, wobei das Gargerät ferner aufweist: eine Auswerteeinrichtung zur spektroskopischen Auswertung der von dem mindestens einen Lichtsensor ermittelten Messergebnisse und eine Steuereinrichtung zum Steuern eines Garablaufs abhängig von einem Ergebnis der Auswertung.

EP 0 682 243 A1 offenbart eine Vorrichtung und ein Verfahren zur Messung des Bräunungsgrades eines Gargutes, insbesondere eines Backgutes angegeben, mit mindestens einer Strahlungsquelle, die eine Messstrahlung und eine Referenzstrahlung unterschiedlicher Wellenlängenbereiche erzeugt, deren Reflektion und Rückstreuung unterschiedlich vom Bräunungsgrad des Gargutes beeinflusst wird, die beide über eine Optik auf das Gargut abgestrahlt werden, mit einem Messsensor zur Erfassung der vom Gargut emittierten Strahlung, mit einem Referenzsensor zur Erfassung der Intensitäten der Messstrahlung und der Referenzstrahlung, und mit einer Einrichtung zur Ermittlung des Bräunungsgrades aus der vom Messsensor detektierten Intensität der Messstrahlung, aus der vom Messsensor detektierten Intensität der Referenzstrahlung, aus der vom Referenzsensor detektierten Intensität der Messstrahlung und aus der vom Referenzsensor detektierten Intensität der Referenzstrahlung.

JP 61265429 A offenbart ein Verfahren, bei dem eine Oberfläche eines Garguts unter Erhitzen mit zwei Arten von Licht mit jeweils unterschiedlichen Wellenlängen bestrahlt wird und das reflektierte Licht durch ein Photometer erfasst werden. Das Lebensmittel wird durch eine Heizeinrichtung erwärmt und mit Lichtquellen mit unterschiedlichen Emissionswellenlängen bestrahlt, um die von dem Lebensmittel reflektierten Strahlen mittels des Photometers mit Empfindlichkeiten für diese beiden Emissionswellenlängen zu erfassen. Die Emissionsstärke der ersten Lichtquelle hat ihr Maximum bei eine Wellenlänge von 300 W, 600 nm, während die Emissionsstärke der zweiten Lichtquelle ihr Maximum bei einer Wellenlänge von 700 W, 1200 nm hat. Der Oberflächenzustand des Garguts kann durch die Lichtstrahlen bestimmt werden. Dementsprechend kann ein Garen, das zu jeder Zeit einen guten Endzustand zeigt, durch Voreinstellen des Erfassungspegels von reflektierten Strahlen, die für ein Garmenü geeignet sind, bewirkt werden.

Es ist die **Aufgabe** der vorliegenden Erfindung, die Nachteile des Standes der Technik zumindest teilweise zu überwinden und insbesondere eine verbesserte Möglichkeit zum Betreiben eines Haushalts-Gargeräts beruhend auf einer Bildauswertung eines Garrauminhalts bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verfahren zum Betreiben eines Haushalts-Gargeräts mit einem Garraum und mindestens einer Kamera, die zum Aufnehmen von bildpunktbasierten Bildern aus dem Garraum eingerichtet ist, bei dem (a) mittels der mindestens einen Kamera mindestens ein Bild aus dem Garraum aufgenommen wird und (b) das Bild unter Ausschluss der Helligkeitswerte seiner zugehörigen Bildpunkte ausgewertet wird.

Dieses Verfahren ergibt den Vorteil, dass aus dem Garraum aufgenommene Bilddaten weitgehend unabhängig von einer z.B. durch eine Garraumbeleuchtung und/oder einen Einfall von Umgebungslicht erzeugten Helligkeitsverteilung in dem Garraum ausgewertet werden können. In anderen Worten wird mittels des Verfahrens das Problem der typischerweise inhomogenen Helligkeitsverteilung im Garraum zur Bildauswertung gelöst. Insbesondere ist die Auswertung vorteilhafterweise unabhängig von einer Einschubebene und Garguthöhe. Auch wird der Vorteil einer größeren Robustheit gegenüber lichtquellenbedingten Helligkeitsänderungen erreicht, die sich beispielsweise aufgrund einer Betriebstemperatur, eines Alters der Lichtquelle und/oder aufgrund eines sich verändernden Lichteinfalls durch eine Garraumtür ergeben. Das Verfahren ist zudem vorteilhafterweise weitgehend unabhängig gegenüber konstruktiven Änderungen der Beleuchtungsanordnung wie einer Zahl und/oder Anordnung von Lichtquellen zur Garraumausleuchtung. Darüber hinaus ergibt sich der Vorteil, dass die Bildauswertung einfacher und schneller ausführbar ist, insbesondere durch Reduktion der auszuwertenden Datenmenge.

Das Haushalts-Gargerät kann insbesondere ein Backofen, ein Mikrowellengerät, ein Dampfbehandlungsgerät oder beliebige Kombinationen davon sein, z.B. ein Backofen mit zusätzlicher Mikrowellen- und/oder Dampfbehandlungsfunktion. Der Garraum kann auch als Muffel oder Backrohr bezeichnet werden. Das Haushalts-Gargerät kann einen oder mehrere Garräume aufweisen, z.B. in Form eines Doppelstockofens mit zwei übereinander angeordneten Garräumen.

Es ist eine Weiterbildung, dass der Garraum mehrere Einschubebenen zur Positionierung von Gargutträgers wie Gitterosten, Backblechen usw. aufweist. Der Garraum weist ein typischerweise eine frontseitig angeordnete Beschickungsöffnung auf, die mittels einer Garraumtür verschließbar ist.

Die mindestens eine Kamera nimmt bildpunktbasierte Bilder auf, wobei jedem Bildpunkt oder Pixel mehrere Farbraumkoordinaten bzw. deren zugehörige Werte zugeordnet sind. Dies kann auch so ausgedrückt werden, dass ein Bild mehrere Farbraumkanäle (im Folgenden auch einfach als "Kanäle" bezeichnet) aufweist, welche die möglichen Farbraumkoordinaten bezeichnen.

Es ist eine Weiterbildung, dass die Kamera eine Farbkamera ist. Den Bildpunkten eines aufgenommenen Farbbilds sind dabei mehrere Farben oder Farbraumkanäle zugeordnet, z.B. rot, grün und blau für den Fall eines RGB-Bilds.

Es ist eine Weiterbildung, dass die Kamera eine Schwarzweiß-Kamera ist, die in möglichst kurzem Abstand eine Serie mit mehreren (1-Kanal-) Bilder aufnimmt, wobei für die Beleuchtung der einzelnen Bilder unterschiedliche Lichtfarben verwendet werden, z.B. Rotlicht, Grünlicht und Blaulicht. Die einzelnen (1-Kanal-) Bilder der Serie könnten konkateniert werden und dann als ein Farbbild angesehen werden.

Befindet sich in dem Garraum Gargut, zeigt das mindestens eine aufgenommene Bild typischerweise das Gargut (z.B. ein oder mehrere verteilte angeordnete Speisen) sowie häufig auch Bereiche des Garraums wie eine Garraumwandung. Zur Auswertung kann in einer Weiterbildung derjenige Bildbereich, der kein Gargut zeigt, unberücksichtigt bleiben. Dazu kann z.B. eine Objekterkennung auf Gargut durchgeführt werden. Die Identifizierung von Bildbereichen, die Gargut enthalten, und Bildbereichen, die kein Gargut, sondern z.B. eine Garraumwandung zeigen, ist grundsätzlich bekannt und wird deshalb hier nicht weiter vertieft.

Die mindestens eine Garraumkamera ist in einer Weiterbildung in einer oberen Hälfte des Garraums angeordnet, um das Gargut besonders vollflächig aufnehmen zu können. Insbesondere kann die mindestens eine Garraumkamera im Bereich einer Decke, einer linken Seitenwand, einer rechten Seitenwand, einer Rückwand und/oder der Garraumtür angeordnet sein. Beispielhaft kann eine Garraumkamera im Bereich der Decke des Garraums und eine weitere Garraumkamera im oberen Drittel oder Viertel der linken Seitenwand oder der rechten Seitenwand angeordnet sein.

Es ist eine Weiterbildung, dass das Haushalts-Gargerät mindestens eine Beleuchtungseinrichtung, z.B. umfassend ein oder mehrere Lichtquellen, insbesondere Lichtstrahler, zur Beleuchtung des Garraums aufweist. Die Lichtquellen können grundsätzlich beliebig in Bezug auf den Garraum angeordnet sein, z.B. in einer Decke, in einer oberen Hälfte seitlicher Garraumwandungen (linke Seitenwand, rechte Seitenwand, Rückwand), in der Garraumtür usw. Insbesondere kann mindestens eine Lichtquelle in der Nähe einer Kamera angeordnet sein.

Die Bildauswertung, z.B. zur Bräunungsbestimmung eines oder mehrerer Speisen, kann dann unter Ausschluss der Helligkeitswerte der Bildpunkte mindestens eines aufgenommenen Bilds vorgenommen werden.

Es ist eine Weiterbildung, dass die Helligkeitswerte zur Auswertung nicht berücksichtigt werden und dadurch ausgeschlossen werden, aber in den Bilddaten des ausgewerteten Bilds weiterhin vorhanden sind. Dies kann z.B. vorteilhaft sein, wenn das Bild zusätzlich dazu vorgesehen ist, einem Nutzer auf einem Bildschirm angezeigt zu werden.

Auf der Basis der Auswertung bzw. beruhend auf dem Ergebnis der Auswertung kann das Haushalts-Gargerät mindestens eine Aktion auslösen, z.B. einen Garvorgang (z.B. eine Garraumtemperatur) an einen erkannten Gargrad anpassen, eine Restlaufdauer bestimmen und ggf. anzeigen, den Garvorgang abbrechen, einen Hinweis an einen Nutzer ausgeben und/oder in eine andere Garphase (z.B. eine Warmhaltephase) übergehen usw.

Es ist eine Ausgestaltung, dass in Schritt (b) die Teilschritte (b1), dass aus dem aufgenommenen Bild ein Bild (im Folgenden ohne Beschränkung der Allgemeinheit als "helligkeitsnormiertes" Bild bezeichnet) erzeugt wird, bei dem die Helligkeitswerte der zugehörigen Bildpunkte abgetrennt worden sind, und (b2), dass das helligkeitsnormierte Bild ausgewertet wird, durchgeführt werden. Das helligkeitsnormierte Bild weist also keine Helligkeitsinformation mehr auf. Dadurch wird der Vorteil erzeugt, dass sich eine Datenmenge und damit auch eine Anforderungen an eine zur Auswertung benötigte Rechenleistung merklich reduzieren lässt.

Es ist eine Ausgestaltung, dass in Schritt (b1) das helligkeitsnormierte Bild aus einem Bild erzeugt wird, dessen Bildpunkte jeweils mehrere Farbraumkoordinaten einschließlich einer Helligkeitskoordinate aufweisen, indem die Helligkeitskoordinate abgetrennt wird. Dies ermöglicht einen besonders einfache Abtrennung oder Ausschluss der Helligkeitswerte durch einfaches Eliminieren der Helligkeitskoordinate(n). In anderen Worten ist in dem helligkeitsnormierten Bild der die Helligkeitskoordinate repräsentierende Kanal ("Helligkeitskanal") eliminiert worden. Zur Umsetzung dieser Ausgestaltung wird das Bild, aus dem das helligkeitsnormierte Bild erzeugt wird, bzw. dessen Bildpunkte also durch einen Farbraum beschrieben, der die Helligkeit als eine eigene Farbraumkoordinate aufweist. Die verbleibenden Farbraumkoordinaten des helligkeitsnormierten Bild werden im Folgenden auch als "Farbkoordinaten" bezeichnet. Die Farbkoordinaten spannen dann einen helligkeitsnormierten Farbraum auf. Konkrete Wertetupel der Farbkoordinaten lassen sich dann auf einen Farbort des helligkeitsnormierten Farbraums abbilden.

Es ist eine Ausgestaltung, dass das helligkeitsnormierte Bild durch Elimination des Helligkeitskanal aus einem HSX-Bild erzeugt wird. Hierbei ergibt sich der Vorteil, dass ein HSX-Bild eine weitverbreitete Farbraumdarstellung nutzt, die sich zudem leicht auswerten lässt. Zudem lässt sich die Bilddatenmenge um die Datenmenge des Helligkeitskanals reduzieren. Unter einem HSX-Bild wird insbesondere ein Bild verstanden, dessen Farbraumkoordinaten einen Farbwert (engl. "hue"), eine Farbsättigung (engl. "saturation") und einen Helligkeitswert umfassen. Das helligkeitsnormierte Bild kann alternativ durch Elimination des Helligkeitskanal z.B. aus einem im YUV-Format, YIQ-Format usw. vorliegenden Bild erzeugt werden.

Der Farbwert kann als Farbwinkel auf dem Farbkreis (z.B. mit 0° für Rot, 120° für Grün, 240° für Blau) dargestellt oder angegeben werden. Die Farbsättigung kann als Prozentwert (z.B. mit 0% = Neutralgrau, 50% = wenig gesättigte Farbe, 100% = gesättigte, reine Farbe), entsprechend einem Intervall von Null bis Eins, dargestellt werden. Farbwert und Farbsättigung bilden die beiden Farbkoordinaten, die einen, z.B. kreisförmigen, helligkeitsnormierten (H, S)-Farbraum aufziehen.

Das HSX-Bild kann in mehreren Varianten (mit X = V, L, B oder I) vorliegen, die sich in der Darstellung des Helligkeitswerts unterscheiden, beispielsweise als
- HSV-Bild, bei dem der Helligkeitswert (engl. "value", auch Dunkelstufe genannt) als Prozentwert (0% = keine Helligkeit, 100% = volle Helligkeit), entsprechend einem Intervall von Null bis Eins, dargestellt wird;
- HSL-Bild mit der relativen Helligkeit (engl. "lightness") anstelle des Hellwerts;
- HSB-Bild mit der absoluten Helligkeit (engl. "brightness") anstelle des Hellwerts;
- HSI-Bild mit der Lichtintensität (engl. "intensity") anstelle des Hellwerts.

Da der Helligkeitskanal X eliminiert wird, sind alle Varianten eines HSX-Bild gleichartig nutzbar.

Es ist eine Ausgestaltung, dass die Bildpunkte des in Schritt (a) aufgenommenen Bilds keine eigenständige Helligkeitskoordinate aufweisen und in Schritt (b1) das aufgenommenen Bild in ein Bild umgewandelt wird, dessen Bildpunkte jeweils mehrere Farbraumkoordinaten einschließlich einer Helligkeitskoordinate aufweisen. So können die Helligkeitswerte bzw. kann die Helligkeitsinformation vorteilhafterweise vergleichsweise einfach auch aus aufgenommenen Bildern ausgeschlossen oder eliminiert werden, die keinen eigenständigen Helligkeitskanal aufweisen.

Es ist eine Ausgestaltung, dass in Schritt (a) ein RGB-Bild oder CMYK-Bild aufgenommen wird und in Schritt (b1) zunächst das RGB-Bild oder CMYK-Bild in ein HSX-Bild umgewandelt wird und dann das helligkeitsnormierte ("HS"-)Bild aus dem HSX-Bild durch Abtrennung der Helligkeitswerte erzeugt wird. So wird der Vorteil erreicht, dass die häufig von einer Farbkamera im RGB-Format oder CMYK-Format erzeugten Farbbilder zur Durchführung des Verfahrens nutzbar sind. Die Transformation in ein HSX-Bild ist allgemein bekannt, für die RGB nach HSV-Transformation z.B. gemäß dem Formelsatz von Gonzalez und Woods, von Foley und Van Dam oder von Travis. Gegenüber einem RGB-Bild wird durch die Nutzung eines HSX-Bild eine Reduzierung der Datenmenge um ein Drittel, gegenüber einem CMYK-Bild sogar um die Hälfte erreicht.

Jedoch ist das Verfahren nicht auf die Verwendung von RGB-, CMYK-, HSX- usw. Bildern beschränkt.

Es ist eine Ausgestaltung, dass das Bild zur Bestimmung eines Gargrads von in dem Bild abgebildetem Gargut (d.h., ein oder mehreren unterschiedlichen Gargütern) anhand mindestens einer verbliebenen Farbkoordinate ausgewertet wird, z.B. beruhend auf einer Auswertung des Farbwerts, der Farbsättigung oder eines aus dem Farbwert und der Farbsättigung bestimmten Farborts eines helligkeitsnormierten HSX-Bilds bzw. HS-Bilds.

Es ist eine Weiterbildung, dass der Gargrad eines Garguts durch Auswertung der einzelnen oder gruppenweise Bildpunkte dieses Garguts in dem helligkeitsnormierten Bild bestimmt wird. Dadurch kann eine Ortsabhängigkeit oder räumliche Verteilung des Gargrads mitberücksichtigt werden.

Es ist eine Weiterbildung, dass der Gargrad eines Garguts durch Berechnung eines Gesamtfarborts für das Garguts bestimmt wird. Dies kann z.B. durch - ggf. gewichtete - Wertemittelung der Werte mindestens einer Farbkoordinate der zu dem Gargut gehörigen Bildpunkte durchgeführt werden.

Unter einem Gargrad kann allgemein eine Messgröße verstanden werden, welche unterschiedliche Garzustände mit den Endpunkten "nicht gar" und "gar" abbildet oder repräsentiert. Vorliegend wird eine Änderung eines Gargrads durch Feststellung eines Farbwechsels an der Oberfläche des Garguts erkannt. Die aktuelle Farbe und/oder ein Farbwechsel stellen also einen quantifizierbaren Hinweis auf den Gargrad dar.

Es ist eine Weiterbildung, dass der Gargrad ein Bräunungsgrad ist. Im Gegensatz zu einer bisher verwendeten Bestimmung des Bräunungsgrads anhand einer zunehmenden Verdunklung des Garguts lässt sich der Bräunungsgrad vorliegend beispielsweise aus einem Farbwechsel, z.B. von einer nicht-braunen Farbe wie grün zu braun, feststellen. Dies entspräche bei einem HS-Bild einer Änderung eines Farborts in einer (H, S)-Ebene, z.B. von grün (H = 120°; S = 100%) zu braun (H = 20°; S = 75%). Jedoch können auch andere Gargrade anstelle eines Bräunungsgrads bestimmt werden. So verlieren bestimmte Gargüter mit zunehmendem Gargrad ihre Farbe, oder es kann mit zunehmendem Gargrad zu einem anderen Farbwechsel als zu braun kommen. Dies kann beispielsweise berücksichtigt werden, wenn die Art des Garguts vorher bekannt ist, z.B. aufgrund einer Nutzereingabe oder einer automatisches Bestimmung.

Der Gargrad bzw. das Erreichen eines Ziel-Gargrads kann über die ganze Oberfläche eines Garguts ("global") bestimmt werden oder für verschiedene Teilbereiche des Garguts getrennt ("lokal") bestimmt werden. Speziell kann bei lokaler Bestimmung des Gargrads durch das Gargerät mindestens eine Aktion ausgelöst werden, wenn ein Ziel-Gargrad bereits in einem Teilbereich erreicht wird, für mehrere Teilbereiche erreicht wird oder für alle Teilbereiche erreicht wird.

Es ist eine Ausgestaltung, dass ein Erreichen eines Ziel-Gargrads des betrachteten Garguts anhand eines Erreichens eines durch die verbliebenen Farbkoordinaten definierten Ziel-Farbpunkts oder einer Umgebung davon (z.B. von Hziel ± 2° und Sziel ± 5%) bestimmt wird. Dies ermöglicht eine besonders einfache Bestimmung eines fertigen Garzustands des betrachteten Garguts. Der Ziel-Gargrad kann in einer Weiterbildung vor oder mit Beginn eines Garvorgangs festgelegt werden. Wenn beispielsweise im Rahmen eines Garprogramms eine bestimmte Speise (z.B. Hähnchen, Pizza, Auflauf, usw.) und ein gewünschter Bräunungsgrad (z.B. "knusprig") eingestellt werden, kann daraus der dem Ziel-Gargrad, insbesondere Ziel-Bräunungsgrad, entsprechende Ziel-Farbpunkt berechnet oder aus einem Datenspeicher abgerufen werden.

Es ist eine Ausgestaltung, dass die Schritte (a) und (b) zeitlich aufeinanderfolgend mehrfach durchgeführt werden. Dadurch können die Farbkoordinaten des Garguts bzw. der Gargutoberfläche vorteilhafterweise zu unterschiedlichen Zeiten ausgewertet werden und so auch dynamische Effekte mitberücksichtigt werden. Insbesondere können zeitlich aufeinanderfolgend ermittelte Farbkoordinaten eines Garguts zur Bestimmung eines Ziel-Gargrads des Garguts und/oder einer Restgardauer ausgewertet werden.

Es ist eine Weiterbildung, dass die zeitlich aufeinanderfolgenden Farbkoordinaten bildpunktweise ausgewertet werden, z.B. durch Bildvergleich. Beispielsweise können zur Bestimmung des Ziel-Gargrads und/oder der Restgardauer Differenzbilder erzeugt und ausgewertet werden. Ein Erreichen eines Ziel-Gargrads kann dann z.B. anhand dessen festgestellt werden, dass eine zeitliche Änderung der Farbkoordinaten für mindestens 70% der Bildpunkte unterhalb eines bestimmten Schwellwerts liegt und ggf. diese Bildpunkte innerhalb eines bestimmten Abstands von einem Ziel-Gargrad liegen.

Es ist eine Ausgestaltung, dass zur Bestimmung des Ziel-Gargrads des Garguts und/oder der Restgardauer ein Kurvenverlauf mindestens einer Farbkoordinate ausgewertet wird. So lassen sich vorteilhafterweise Gargutzustände (z.B. ein Gargrad, speziell Bräunungsgrad) besonders flexibel und zuverlässig auswerten. Zur Auswertung des zeitlichen Verlaufs lassen sich die bekannten Methoden zur Kurvenauswertung oder Kurvendiskussion verwenden, z.B. eine Bestimmung von Maximal- und/oder Minimalpunkten, Sattelpunkten, Punkten hoher Steigung usw. Der Kurvenverlauf kann im beispielhaften Fall eines HSX-Bilds z.B. eine zeitliche Änderung eines - normierten oder nicht normierten - Farbwinkels des Farbwerts und/oder eine - normierte oder nicht normierte - Änderung eines Sättigungsgrads umfassen.

Die Aufgabe wird auch gelöst durch ein Haushalts-Gargerät, aufweisend einen Garraum und mindestens eine Kamera zum Aufnehmen von bildpunktbasierten Bildern, wobei das Haushalts-Gargerät zur Durchführung des Verfahrens wie oben beschrieben ausgestaltet ist. Das Haushalts-Gargerät kann analog zu dem Verfahren ausgebildet werden und weist die gleichen Vorteile auf.

Die Auswertung kann im Haushalts-Gargerät oder außerhalb des Haushalts-Gargeräts, z.B. in einer externen Datenverarbeitungseinrichtung wie einem Netzwerkserver oder einem Cloudrechner, erfolgen. Bei Auswertung im Haushalts-Gargerät weist dieses eine entsprechend Datenverarbeitungseinrichtung auf, bei externer Auswertung eine Kommunikationsschnittstelle mit einer externen Datenverarbeitungseinrichtung. Auch kann das Verfahren grundsätzlich beliebig verteilt auf dem Haushalts-Gargerät und der externen Datenverarbeitungseinrichtung durchgeführt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Haushalts-Gargeräts mit mindestens einer Kamera;
- Fig.2: zeigt eine Auftragung eines Mittelwerts der verschiedenen Farbraumkoordinaten eines HSV-Bilds einer Weißreferenz in Abhängigkeit von einer Einschubhöhe;
- Fig.3: zeigt eine Standardabweichung für die verschiedenen Farbkoordinaten eines HSV-Bilds einer Weißreferenz in Abhängigkeit von einer Einschubhöhe;
- Fig.4: zeigt einen Kurvenverlauf normierter Farbkoordinaten eines HSV-Bilds eines Garguts über eine Dauer eines Garbetriebs; und
- Fig.5: zeigt einen Verfahrensablauf zum Vorbereiten einer Auswertung eines aufgenommenen Bilds zum Betreiben des Haushalts-Gargeräts.

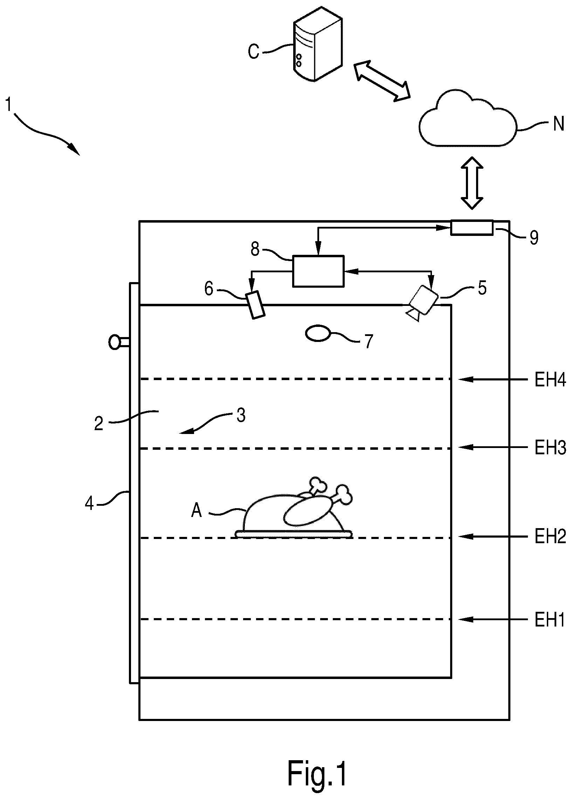

**Fig.1** zeigt als Schnittdarstellung in Seitenansicht eine Skizze eines Haushalts-Gargeräts 1 mit einem Garraum 2, dessen frontseitige Beschickungsöffnung 3 mittels einer Garraumtür 4 verschließbar ist. Der Garraum 2 weist mehrere Einschubebenen mit entsprechenden Einschubhöhen EH1 bis EH4 auf, wobei sich die Einschubhöhe EH1 nahe eines Bodens des Garraums 2 befindet und sich die Einschubhöhe EH4 nahe einer Decke des Garraums 2 befindet. Hier ist Gargut A, das selbst eine gewisse Höhe aufweist, auf der zweiten Einschubhöhe EH2 aufgelegt, z.B. auf einem in der zugehörigen Einschubebene eingesetzten Gitterrost oder Backblech (o. Abb.).

In der Decke des Garraums 2 ist eine Farbkamera 5 angebracht, es können aber auch noch andere Kameras (o. Abb.) vorhanden sein. Die Farbkamera 5 ist dazu eingerichtet (d.h., ausgebildet und angeordnet), bildpunktbasierte Farbbilder von oben oder von schräg oben aus dem Garraum 2 aufzunehmen.

Das Haushalts-Gargerät 1 weist ferner mindestens eine Beleuchtungseinrichtung zur Beleuchtung des Garraums 2 auf, z.B. aufweisend einen Strahler (z.B. LED-Strahler) 6 im Bereich der Decke und einen Strahler (z.B. LED-Strahler) 7 im Bereich der linken und/oder rechten Seitenwand des Garraums 2. Die sich bei Betrieb der Strahler 6, 7 aufgrund deren Lichtkegel in dem Garraum 2 ergebende Helligkeitsverteilung ist in der horizontalen Ebene inhomogen und auch von der gemessenen Höhe in dem Garraum 2 abhängig. Insgesamt ergibt sich im Garraum eine in allen drei Raumrichtungen inhomogene Lichtverteilung.

Die Farbkamera 5 und die Strahler 6, 7 sind mit einer Steuereinrichtung 8 verbunden, die auch als Datenauswerteeinrichtung eingerichtet sein kann.

Die Steuereinrichtung 8 kann ferner mit einem Kommunikationsmodul 9 (z.B. einem Ethernet-Modul, einem WLAN-Modul usw.) verbunden sei, und über das Kommunikationsmodul 9 z.B. über ein Netzwerk N mit einem geräteexternen Rechner C. Dadurch wird es ermöglicht, Datenverarbeitungsabläufe bzw. Rechenkapazität ganz oder teilweise aus dem Haushalts-Gargerät 1 auszulagern, z.B. in der sog. Cloud bereitzuhalten.

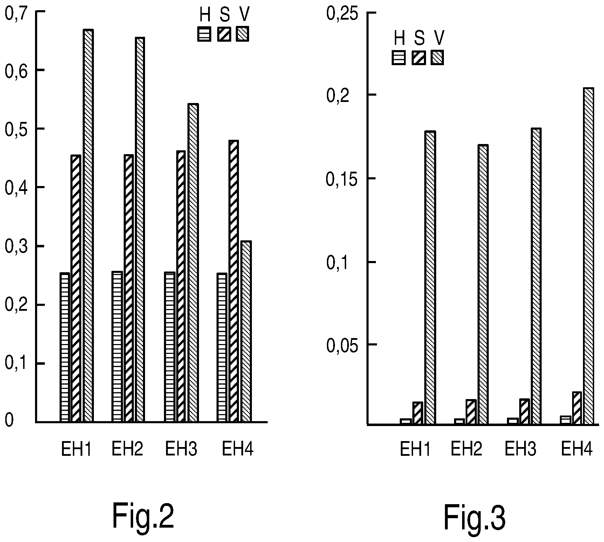

**Fig.2** zeigt eine Auftragung eines Mittelwerts der bildpunktbezogenen Werte für die verschiedenen Farbraumkoordinaten bzw. Kanäle H (Farbwert), S (Sättigung) und V (Helligkeit) eines HSV-Bilds einer Weißreferenz in Abhängigkeit von den Einschubhöhen EH1 bis EH4. Die Farbraumkoordinaten H, S und V sind hier wie folgt auf einen Maximalwert "1" normiert: Der Farbwert H ist auf 360° normiert (ein normierter Farbwert H = 0 entspricht somit einem Farbwinkel von 0° oder 360°, ein Farbwert von 0,5 einem Farbwinkel von 180°, usw.), während die Farbraumkoordinaten S und V auf 100% normiert sind (so entspricht ein normierter Wert von 0,5 einer Sättigung von 50% bzw. einer Helligkeit von 50%, usw.).

Das HSV-Bild kann direkt oder indirekt (z.B. über ein RGB-Bild) aufgenommen worden sein.

Die Mittelwerte über die Bildpunkte bzw. die Fläche der Weißreferenz der H- und S- Kanäle H, S sind für die Einschubhöhen EH1 bis EH4 nahezu konstant, während sich der V-Kanal V stark ändert.

Fig.3 zeigt eine Standardabweichung für die verschiedenen Farbkoordinaten bzw. Kanäle H, S, V des HSV-Bilds aus Fig.2 in Abhängigkeit von den Einschubhöhen EH1 bis EH4. Die Standardabweichung im V-Kanal V ist wesentlich Größer als im H- und S-Kanal H, S. Das bedeutet, dass die H- und S-Werte der einzelnen Bildpunkte nahezu konstant innerhalb der Fläche der Weißreferenz auf der jeweiligen Einschubhöhen EH1 bis EH4 sind.

Eine Bräunungsbeurteilung der Garguts A unter Berücksichtigung der Helligkeit wird dadurch sehr fehlerbehaftet, insbesondere wenn die Einschubhöhe EH1 bis EH4 und Garguthöhe und -form nicht bekannt sind.

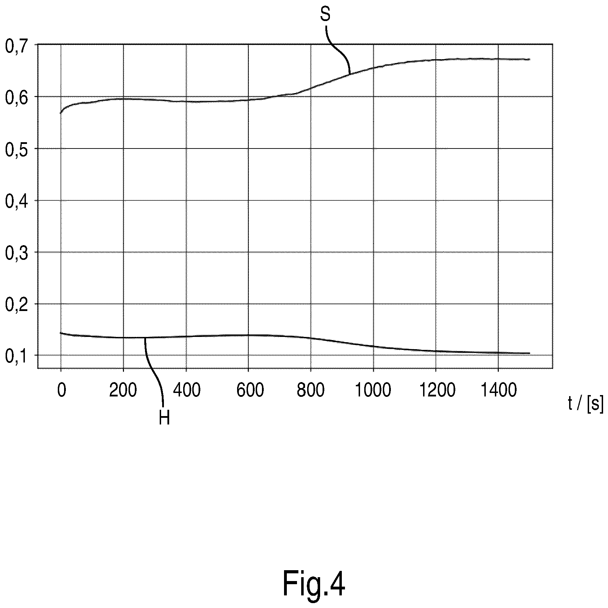

Fig.4 zeigt einen Kurvenverlauf der analog zu Fig.2 normierten Farbkoordinaten H und S eines HSV-Bilds einer Oberseite eines Garguts A in Form einer Pizza Mozzarella über eine Dauer t eines Ofengarbetriebs in Sekunden.

Ab ca. t = 800 s beginnen sich die Werte für H (untere Kurve) und V (obere Kurve) merklich zu verändern, und zwar sinkt H ab und steigt S an. Die Kurven oder Kurvenverläufe gehen danach nach t ca. 1200 s in einen jeweiligen Plateauzustand über. Diese Änderung von H und S entspricht einer Bräunung der Oberfläche der Pizza, so dass die Bräunung auch ohne Berücksichtigung des Helligkeitswerts S zuverlässig erkennbar ist.

Aus den Kurven oder Kurvenverläufen für H und S lässt sich ein Erreichen eines Ziel-Gargrads und/oder der Restgardauer bestimmen. Ist beispielsweise der Zeitpunkt bis zum Einsetzen und/oder bis zum Abschluss der Bräunung bekannt, kann dann durch beispielsweise experimentell ermittelte Tabellen oder Kennlinien der Zeitpunkt bis zum Erreichen des Ziel-Gargrads und/oder der Restgardauer nachgeschlagen werden.

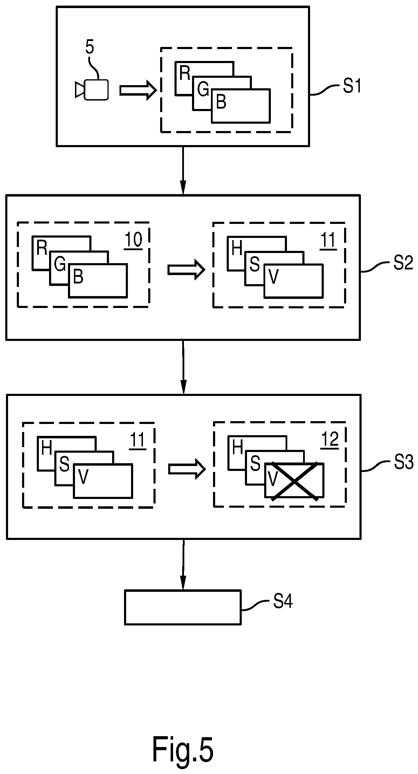

**Fig.5** zeigt einen Verfahrensablauf zum Vorbereiten einer Auswertung eines in einem Schritt S1 durch die Kamera 5 aufgenommenen RGB-Bilds 10 zum Betreiben des Haushalts-Gargeräts 1. Beispielsweise um die Fehlerbehaftung bei der Bräunungsbeurteilung zu verringern, wird die hochgradig fehlerbehaftete Helligkeitsinformation weggelassen bzw. zur weiteren Auswertung ausgeschlossen.

Dazu wird in einem Schritt S2 das aufgenommene RGB-Bild 10 mit seinen Kanälen R (rot), G (grün) und B (blau) in ein HSV-Bild 11 mit seinen Kanälen H, S und V umgewandelt oder transformiert.

In einem Schritt S3 wird der V-Kanal separiert, wodurch sich ein helligkeitsnormiertes HS-Bild 12 ergibt, dessen Datenmenge um ca. ein Drittel geringer ist als die des HSV-Bilds 11. Der V-Kanal V wird folglich in Schritt S4 nicht zu weiteren Auswertung verwendet, wie durch seine Durchstreichung angedeutet.

Die Schritte S3, S3 und/oder S4 können ganz oder teilweise auf der Steuereinrichtung 8 und/oder auf dem Rechner C ablaufen.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw. Auch kann eine Zahlenangabe genau die angegebene Zahl als auch einen üblichen Toleranzbereich umfassen, solange dies nicht explizit ausgeschlossen ist.

### Bezugszeichenliste

- 1: Haushalts-Gargerät
- 2: Garraum
- 3: Beschickungsöffnung
- 4: Garraumtür
- 5: Farbkamera
- 6: Strahler
- 7: Strahler
- 8: Steuereinrichtung
- 9: Kommunikationsmodul
- 10: RGB-Bild
- 11: HSV-Bild
- 12: Helligkeitsnormiertes HS-Bild
- A: Gargut
- B: B-Kanal
- C: Rechner
- EH1-EH4: Einschubhöhe
- G: G-Kanal
- H: H-Kanal
- N: Netzwerk
- R: R-Kanal
- S: S-Kanal
- V: V-Kanal

## Patentansprüche

1. Verfahren (S1-S4) zum Betreiben eines Haushalts-Gargeräts (1) mit einem Garraum (2) und mindestens einer Kamera (5), die zum Aufnehmen von bildpunktbasierten Bildern (10) aus dem Garraum (2) eingerichtet ist, bei dem
(a) mittels der mindestens einen Kamera (5) mindestens ein Bild (10) aus dem Garraum (2) aufgenommen wird (S1), ,
(b) das Bild (10) unter Ausschluss der Helligkeitswerte seiner zugehörigen Bildpunkte ausgewertet wird (S2-S4), und
beruhend auf einem Ergebnis des Auswertens durch das Haushalts-Gargerät (1) mindestens eine Aktion ausgelöst wird.

2. Verfahren (S1-S4) nach Anspruch 1, bei dem Schritt (b) die Teilschritte
(b1) aus dem aufgenommenen Bild (10) wird ein helligkeitsnormiertes Bild (12) erzeugt, bei dem die Helligkeitswerte der zugehörigen Bildpunkte abgetrennt worden sind (S2-S3), und
(b2) das helligkeitsnormierte Bild (12) wird ausgewertet (S4),
umfasst.

3. Verfahren (S1-S4) nach Anspruch 2, bei dem in Schritt (b1) das helligkeitsnormierte Bild (12) aus einem Bild (11) erzeugt wird, dessen Bildpunkte jeweils mehrere Farbraumkoordinaten (H, S, V) einschließlich einer Helligkeitskoordinate (V) aufweisen, indem die Helligkeitskoordinate (V) abgetrennt wird (S3).

4. Verfahren (S1-S4) nach Anspruch 3, bei dem in Schritt (b1) das helligkeitsnormierte Bild (12) aus einem HSX-Bild (11) erzeugt wird (S3).

5. Verfahren (S1-S4) nach einem der Ansprüche 3 bis 4, bei dem
- die Bildpunkte des in Schritt (a) aufgenommenen Bilds (12) keine eigenständige Helligkeitskoordinate aufweisen und
- in Schritt (b1) das aufgenommenen Bild (12) in ein Bild (11) umgewandelt wird, dessen Bildpunkte jeweils mehrere Farbraumkoordinaten (H, S, V) einschließlich einer Helligkeitskoordinate (V) aufweisen (S2).

6. Verfahren (S1-S4) nach Anspruch 5, bei dem in Schritt (a) ein RGB-Bild (10) aufgenommen wird (S1) und in Schritt (b1) zunächst das RGB-Bild (10) in ein HSX-Bild (11) umgewandelt wird (S2) und dann das helligkeitsnormierte Bild (12) aus dem HSX-Bild (11) durch Abtrennung der Helligkeitswerte (V) erzeugt wird.

7. Verfahren (S1-S4) nach einem der vorhergehenden Ansprüche, bei dem das helligkeitsnormierte Bild (12) zur Bestimmung eines Gargrads, insbesondere Bräunungsgrads, von in dem Bild (12) abgebildetem Gargut (A) anhand mindestens einer verbliebenen Farbkoordinate (H, S) ausgewertet wird.

8. Verfahren (S1-S4) nach Anspruch 7, bei dem ein Erreichen eines Ziel-Gargrads des Garguts (A) anhand eines Erreichens eines durch die verbliebenen Farbkoordinaten (H, S) definierten Ziel-Farbpunkts dieses Garguts (A) oder einer Umgebung davon bestimmt wird.

9. Verfahren (S1-S4) nach einem der Ansprüche 3 bis 8, bei dem die Schritte (a) und (b) zeitlich aufeinanderfolgend mehrfach durchgeführt werden und zeitlich aufeinanderfolgende Farbkoordinaten eines Garguts (A) zur Bestimmung eines Ziel-Gargrads des Garguts (A) und/oder einer Restgardauer ausgewertet werden.

10. Verfahren (S1-S2) nach Anspruch 9, bei dem zur Bestimmung des Ziel-Gargrads des Garguts (A) und/oder der Restgardauer ein Kurvenverlauf mindestens einer Farbkoordinate (H, S) ausgewertet wird.

11. Verfahren (S1-S4) zum Betreiben eines Haushalts-Gargeräts (1) mit einem Garraum (2) und mindestens einer Kamera (5), die zum Aufnehmen von bildpunktbasierten Bildern (10) aus dem Garraum (2) eingerichtet ist, bei dem
- mittels der mindestens einen Kamera (5) mindestens ein Bild (10) aus dem Garraum (2) aufgenommen wird (S1), wobei jedem Bildpunkt des aufgenommenen Bilds (10) mehrere Farbraumkoordinaten zugeordnet sind,
- das aufgenommene Bild (12) in ein Bild (11) umgewandelt wird, dessen Bildpunkte jeweils mehrere Farbraumkoordinaten (H, S, V) einschließlich einer Helligkeitskoordinate (V) aufweisen (S2),
- aus dem umgewandelten Bild (11) ein helligkeitsnormiertes Bild (12) erzeugt wird, bei dem die Helligkeitswerte der zugehörigen Bildpunkte abgetrennt worden sind (S3),
- das mindestens eine helligkeitsnormierte Bild (12) ausgewertet wird (S4) und
- beruhend auf einem Ergebnis des Auswertens durch das Haushalts-Gargerät (1) mindestens eine Aktion ausgelöst wird.

12. Haushalts-Gargerät (1), aufweisend einen Garraum (2) und mindestens eine Kamera (5) zum Aufnehmen von bildpunktbasierten Bildern (12), wobei das Haushalts-Gargerät (1) zur Durchführung des Verfahrens (S1-S4) nach einem der vorhergehenden Ansprüche ausgestaltet ist.

## Claims

1. Method (S1-S4) for operating a household cooking appliance (1) with a cooking chamber (2) and with at least one camera (5) which is configured for recording pixel-based images (10) from the cooking chamber (2), in which
(a) at least one image (10) from the cooking chamber (2) is recorded (S1) by means of the at least one camera (5) and
(b) the image (10) is evaluated (S2-S4) with exclusion of the brightness values of the associated pixels thereof, and
based on a result of the evaluation, at least one action is triggered by the household cooking appliance (1).

2. Method (S1-S4) according to claim 1, wherein step (b) comprises the sub-steps
(b1) a brightness-normalised image (12) is generated from the recorded image (10), wherein the brightness values of the associated pixels have been removed (S2-S3), and
(b2) the brightness-normalised image (12) is evaluated (S4).

3. Method (S1-S4) according to claim 2, wherein in step (b1) the brightness-normalised image (12) is generated from an image (11), the pixels thereof in each case having a plurality of colour space coordinates (H, S, V) including a brightness coordinate (V), by the brightness coordinate (V) being removed (S3).

4. Method (S1-S4) according to claim 3, wherein in step (b1) the brightness-normalised image (12) is generated (S3) from an HSX image (11).

5. Method (S1-S4) according to one of claims 3 to 4, wherein
- the pixels of the image (12) recorded in step (a) do not have a separate brightness coordinate and
- in step (b1) the recorded image (10) is converted into an image (11), the pixels thereof in each case having a plurality of colour space coordinates (H, S, V) including a brightness coordinate (V) (S2).

6. Method (S1-S4) according to claim 5, wherein in step (a) an RGB image (10) is recorded (S1) and in step (b1) initially the RGB image (10) is converted (S2) into an HSX image (11) and then the brightness-normalised image (12) is generated from the HSX image (11) by removing the brightness values (V).

7. Method (S1-S4) according to one of the preceding claims, wherein the brightness-normalised image (12) is evaluated using at least one remaining colour coordinate (H, S) for determining a degree of cooking, in particular a degree of browning, of food to be cooked (A) illustrated in the image (12).

8. Method (S1-S4) according to claim 7, wherein reaching a target degree of cooking of the food to be cooked (A) is determined by reaching a target colour point of this food to be cooked (A) defined by the remaining colour coordinates (H, S) or an environment thereof.

9. Method (S1-S4) according to one of claims 3 to 8, wherein the steps (a) and (b) are repeatedly carried out chronologically in succession and colour coordinates of a food to be cooked (A) are evaluated chronologically in succession for determining a target degree of cooking of the food to be cooked (A) and/or a remaining cooking time.

10. Method (S1-S2) according to claim 9, wherein a curve progression of at least one colour coordinate (H, S) is evaluated for determining the target degree of cooking of the food to be cooked (A) and/or the remaining cooking time.

11. Method (S1-S4) for operating a household cooking appliance (1) having a cooking chamber (2) and at least one camera (5) for recording pixel-based images (12) from the cooking chamber (2), in which
- at least one image (10) from the cooking chamber (2) is recorded (S1) by means of the at least one camera (5), wherein a plurality of colour space coordinates are assigned to each pixel of the recorded image (10),
- the recorded image (12) is converted into an image (11), the pixels thereof in each case having a plurality of colour space coordinates (H, S, V) including a brightness coordinate (V) (S2),
- a brightness-normalised image (12) is generated from the converted image (11) in which the brightness values of the associated pixels have been removed (S3)
- the at least one brightness-normalised image (12) is evaluated (S4) and
- based on a result of the evaluation, at least one action is triggered by the household cooking appliance (1).

12. Household cooking appliance (1) having a cooking chamber (2) and at least one camera (5) for recording pixel-based images (12), wherein the household cooking appliance (1) is configured for carrying out the method (S1-S4) according to one of the preceding claims.

## Revendications

1. Procédé (S1-S4) pour faire fonctionner un appareil de cuisson ménager (1) comprenant une chambre de cuisson (2) et au moins une caméra (5), qui est configurée pour capturer des images basées sur des pixels (10) de la chambre de cuisson (2), dans lequel
a) au moins une image (10) de la chambre de cuisson (2) est capturée (S1) au moyen de l'au moins une caméra (5),
b) l'image (10) est évaluée à l'exclusion des valeurs de luminosité de ses pixels associés (S2-S4), et
sur la base d'un résultat de l'évaluation, au moins une action est déclenchée par l'appareil de cuisson ménager (1).

2. Procédé (S1-S4) selon la revendication 1, dans lequel l'étape b) comprend les étapes partielles suivantes :
b1) à partir de l'image capturée (10), une image normalisée en luminosité (12) est générée, dans laquelle les valeurs de luminosité des pixels associés ont été séparées (S2-S3), et
b2) l'image normalisée en luminosité (12) est évaluée (S4).

3. Procédé (S1-S4) selon la revendication 2, dans lequel, dans l'étape b1), l'image normalisée en luminosité (12) est générée à partir d'une image (11), dont les pixels comprennent respectivement plusieurs coordonnées d'espace colorimétrique (H, S, V) incluant une coordonnée de luminosité (V), en séparant les coordonnées de luminosité (V) (S3).

4. Procédé (S1-S4) selon la revendication 3, dans lequel, dans l'étape b1), l'image normalisée en luminosité (12) est générée (S3) à partir d'une image HSX (11).

5. Procédé (S1-S4) selon l'une des revendications 3 à 4, dans lequel
- les pixels de l'image (12) capturée dans l'étape a) ne comprennent aucune coordonnée de luminosité indépendante et
- dans l'étape b1), l'image capturée (12) est transformée en une image (11), dont les pixels comprennent respectivement plusieurs coordonnées d'espace colorimétrique (H, S, V) incluant une coordonnée de luminosité (V) (S2).

6. Procédé (S1-S4) selon la revendication 5, dans lequel, dans l'étape a), une image RGB (10) est capturée (S1) et dans l'étape b1), l'image RGB (10) est d'abord transformée en une image HSX (11), puis, à partir de l'image HSX (11), l'image normalisée en luminosité (12) est générée en séparant les valeurs de luminosité (V).

7. Procédé (S1-S4) selon l'une des revendications précédentes, dans lequel l'image normalisée en luminosité (12) est évaluée pour déterminer un degré de cuisson, en particulier un degré de brunissement, d'un aliment à cuire (A) représenté dans l'image (12) en se basant sur au moins une des coordonnées de couleur restantes (H, S).

8. Procédé (S1-S4) selon la revendication 7, dans lequel l'atteinte d'un degré de cuisson cible de l'aliment à cuire (A) est déterminée en se basant sur l'atteinte d'un point de couleur cible de cet aliment (A) ou d'un voisinage de celui-ci défini par les coordonnées de couleur restantes (H, S).

9. Procédé (S1-S4) selon l'une des revendications 3 à 8, dans lequel les étapes a) et b) sont exécutées plusieurs fois à la suite l'une de l'autre et des coordonnées de couleur successives dans le temps d'un aliment à cuire (A) sont évaluées pour déterminer un degré de cuisson cible de l'aliment à cuire (A) et/ou une durée de cuisson restante.

10. Procédé (S1-S2) selon la revendication 9, dans lequel une allure de courbe d'au moins une coordonnée de couleur (H, S) est évaluée pour déterminer le degré de cuisson cible de l'aliment à cuire (A) et/ou la durée de cuisson restante.

11. Procédé (S1-S4) pour faire fonctionner un appareil de cuisson ménager (1) comprenant une chambre de cuisson (2) et au moins une caméra (5), qui est configurée pour capturer des images basées sur des pixels (10) de la chambre de cuisson (2), dans lequel
- au moins une image (10) de la chambre de cuisson (2) est capturée (S1) au moyen de l'au moins une caméra (5), dans lequel plusieurs coordonnées d'espace colorimétrique sont associées à chaque pixel de l'image capturée (10),
- l'image capturée (12) est transformée (S2) en une image (11), dont les pixels présentent respectivement plusieurs coordonnées d'espace colorimétrique (H, S, V) incluant une coordonnée de luminosité (V),
- une image normalisée en luminosité (12) est générée à partir de l'image transformée (11), dans laquelle les valeurs de luminosité des pixels associés ont été séparées (S3),
- l'au moins une image normalisée en luminosité (12) est évaluée (S4), et
- en se basant sur un résultat de l'évaluation, au moins une action est déclenchée par l'appareil de cuisson ménager (1).

12. Appareil de cuisson ménager (1) comprenant une chambre de cuisson (2) et au moins une caméra (5) pour capturer des images basées sur des pixels (12), dans lequel l'appareil de cuisson ménager (1) est configuré pour exécuter le procédé (S1-S4) selon l'une des revendications précédentes.
